# EUROPEAN PATENT SPECIFICATION

(11) **EP 3 384 634 B1**
(45) Date of publication and mention of the grant of the patent: **16.09.2020**
(21) Application number: 16831649.5
(22) Date of filing: 02.12.2016
(51) Int. Cl.: H04L 12/24, H04W 16/18

(54) **A NETWORK TRAFFIC ESTIMATION SYSTEM**
SYSTEM ZUR SCHÄTZUNG DES NETZVERKEHRS
SYSTÈME D'ESTIMATION DE TRAFIC RÉSEAU

(30) Priority: 04.12.2015 TR 201515448
(43) Date of publication of application: 10.10.2018
(73) Proprietor: Turkcell Teknoloji Arastirma Ve Gelistirme Anonim Sirketi, Istanbul (TR)
(72) Inventor: ONES, Onur, Istanbul (TR); OZENIR, Omar, Istanbul (TR); SARKAN, Mehmet Onur, 41470 Gebze (TR); GEMALMAZ, Haci Ali, Istanbul (TR); YILDIZ, Ismail, Istanbul (TR)
(74) Representative: Perronace, Andrea
(86) International application number: PCT/TR2016/000174
(87) International publication number: WO 2017/095344

(56) References cited:
- EP-A1- 2 750 432
- WO-A1-2014/127051
- WO-A2-02/44901
- US-A1- 2013 198 767
- US-A1- 2015 195 149

## Description

### Technical Field

The present invention relates to a network traffic estimation system which provides a solution architecture for estimating future network traffic via regression methods from machine learning approaches by looking at historical traffic data.

### Background of the Invention

A team consisting of network planning experts follow traffic, alarm, breakdown and maintenance works in networks in order to continue quality services provided in networks. The teams controlling the network states gathers historical traffic data in excel files in order to make traffic estimation and they perform trend analysis manually. However, increase of the network data which is required to be examined makes it impossible for the teams to examine each data. Therefore, the teams take small samples among the data reaching millions of records and then carry out the examination transaction. Gathering and examining so much data manually lead to a significant labour requirement. Large sizes of data may increase margin of error in data estimations of samples trend analysis of which are carried out.

The Chinese patent document no. CN102111284 discloses a method and device for predicting telecom traffic. The method used in the said invention comprises steps of: determining the prediction granulation of the telecom traffic; selecting a historical and prediction sample; respectively calculating the initial values and the growth rates of the historical and prediction sample by using a unary linear regression model; calculating the traffic prediction of the historical and prediction sample; reading the actual traffic value of the historical sample; and calculating the second traffic prediction according to the deviation between the actual traffic value and the first traffic prediction. Only historical traffic data are used in the said patent document. Therefore, rate of successful prediction is quite low.

The United States patent document no. US2003236084 discloses a system for estimating traffic rates of calls in environments wherein wireless personal communication services are provided. The said system comprises a traffic parameter observation module for collecting real time observations on respective nodes and for making sets of nodes; a regression analysis module for performing regression analysis of observations to assume a prediction model for traffic rates of calls and to estimate traffic rates of internal-to-internal and external-to-internal calls, and a resource allocation module for directing resources. Whereas it is aimed to estimate densities in wireless personal communication networks instead of mobile phone networks in the said patent document.

The United States patent document no. US2010273493 discloses a radio access network management device, facility plan support system, and facility plan support method used therefor. The invention is particularly related to allocation of base stations based on future-dated traffic estimation. The traffic demand estimation unit included in the invention receives the past traffic demand data from near radio cells and uses them in regression analysis, and traffic demand occurs in the near future. Whereas the said patent document relates to a solution for making regional estimation of traffic needs before investments such as base stations to be installed.

The European patent document no. EP2750432 A1 discloses a method for predicting the channel usage of a mobile network resource.

The United States patent document no. US2013198767 relates generally to communication systems and more particularly to a method and apparatus for managing quality of service.

### Summary of the Invention

An objective of the present invention is to realize a network traffic estimation system whereby future network traffic are estimated automatically via regression methods from machine learning approaches by looking at historical traffic data. Another objective of the present invention is to realize a network traffic estimation system whereby hardware requirement and positioning of a network are provided more efficiently by the estimations made and thus service quality and customer satisfaction are increased while enabling decrease in investment costs.

The present invention is defined in the appended independent claims to which reference should be made. Advantageous features are set out in the appended dependent claims.

### Detailed Description of the Invention

"A network traffic estimation system" realized to fulfill the objectives of the present invention is shown in the figure attached, in which:

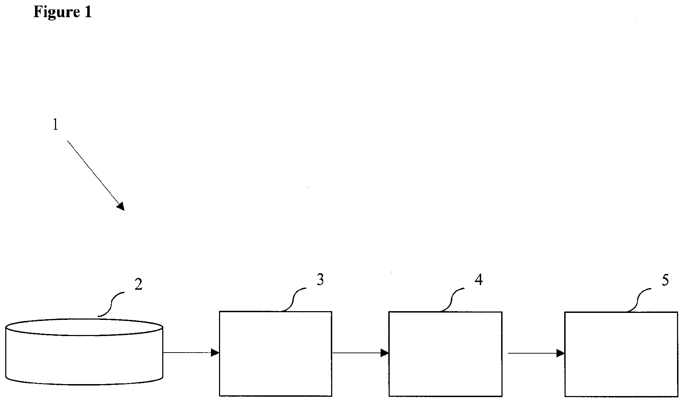

**Figure 1** is a schematic view of the inventive network traffic estimation system.

The components illustrated in the figure are individually numbered, where the numbers refer to the following:
1. System
2. Database
3. Combination unit
4. Application unit
5. Estimation unit

The inventive system (1) for making traffic estimation in a certain period of time is defined in claim 1.

The inventive network traffic estimation system (1) handles the traffic estimation as a machine learning regression problem. Current (up-to-date) network performance indicators, network configuration planning information, planned activities, currently planned works, current network alarms, weather forecasts, current customer and future campaign information are kept on the database (2) on the basis of location/cell

The information belonging to the network traffic history are kept on the database (2). The said information comprise the information of traffic amount experienced in the network in the past. In one preferred embodiment, the application unit (4) uses the information of date when the measurement of the traffic kept on the database (2) is made and the information of location (cell information) wherein the traffic is measured.
Information of the customer complaints history are also kept on the database (2). The said information are the customer complaints experienced in the past. In one preferred embodiment, the application unit (4) uses the information of date of complaint, category of complaint and location (cell) where the complaint is received which is stored on the database (2).

Information belonging to the history of network performance indicators (KPI(key performance indicator)) are kept on the database (2). The said information are a KPT set which indicate the network performance and these information are kept together with the location (cell) and date information.

Information belonging to the network alarm history kept on the database (2). The said information are the history of the warning messages received from the network equipment with respect to the problems and failures. In one preferred embodiment, the application unit (4) uses these information kept on the database (2) on the basis of location (cell) and date.

Information belonging to the history of network configuration parameters are kept on the database (2). The said information configuration parameters of any location (cell) on any date.

Information belonging to the history of work orders are kept on the database (2). The said information are breakdown and maintenance work information on the locations (cells).

Information belonging to the history of weather forecast are kept on the database (2). The said information are the most evaluable temperature, humidity, pressure, wind direction intensity and similar information where any location (cell) is located in any date.

Information belonging to the history of planned works are kept on the database (2). The said information are the information of renewal, readjustment and maintenance works on any location (cell) on the basis of history.

Information belonging to the campaign history are kept on the database (2). The said information comprise the information of data/call campaign realized by marketing teams in the past.

Except the above-mentioned information, all kinds of data which can affect the traffic that may be used as input for the application unit (4) and the history and future values of which are known can be stored on the database (2).

In the inventive traffic estimation system (1), the application unit (4) creates a model for traffic estimation in a certain period of time by regression method and for deciding whether there is an investment need or not.

In one preferred embodiment of the invention, the estimation unit (5) can make estimations by aggregation for the higher locations in the location hierarchy with the traffic estimations obtained by thereof.

Within these basic concepts; it is possible to develop a wide range of embodiments of a network traffic estimation system (1), the invention cannot be limited to examples disclosed herein and it is essentially according to claims.

## Claims

1. A network traffic estimation system (1) for making traffic estimation in a certain period of time; **characterized by:**
- at least one database (2) wherein the following information is stored: information belonging to the network traffic history, information of traffic measurement date, information of traffic measurement cell, information of the customer complaints history, information of complaint date, category of complaint and received complaint cell information, network alarm history information including alarms cell and date;
- at least one combination unit (3) configured to run a method of machine learning, which combines the information located on the database (2) on the basis of cell and date information;
- at least one application unit (4) configured to determine cells and complaint categories that are likely to receive customer complaint by using a regression method on the information kept on the database (2) including:
▪ information of traffic measurement date,
▪ information of traffic measurement cell,
▪ alarms cell and date,
▪ information of complaint date,
▪ category of complaint,
▪ complaint cell information; and
- at least one estimation unit (5) configured to make traffic estimation by the data obtained in the application unit (4).

2. The network traffic estimation system (1) according to Claim 1, **characterized by** the database (2) wherein information belonging to the history of network performance indicators, Key Performance Indicator, KPI are kept.

3. The network traffic estimation system (1) according to any of the preceding claims, **characterized by** the database (2) wherein information belonging to the history of network configuration parameters are kept.

4. The network traffic estimation system (1) according to any of the preceding claims, **characterized by** the database (2) wherein information belonging to the history of work orders are kept.

5. The network traffic estimation system (1) according to any of the preceding claims, **characterized by** the database (2) wherein information belonging to the history of weather forecast are kept.

6. The network traffic estimation system (1) according to any of the preceding claims, **characterized by** the database (2) wherein information belonging to the history of planned works are kept.

7. The network traffic estimation system (1) according to any of the preceding claims, **characterized by** the database (2) wherein information belonging to the history of campaign history are kept.

8. The network traffic estimation system (1) according to any of the preceding claims, **characterized by** the application unit (4) which creates a model for traffic estimation in a certain period of time by regression method.

## Patentansprüche

1. System zur Schätzung des Netzverkehrs (1) zum Durchführen einer Verkehrsschätzung während eines bestimmten Zeitraums; **gekennzeichnet durch:**
- mindestens eine Datenbank (2), in der die folgenden Informationen gespeichert sind: Informationen, die zum Netzwerkverkehrsverlauf gehören, Informationen zum Verkehrsmessdatum, Informationen zur Verkehrsmesszelle, Informationen zum Kundenbeschwerdeverlauf, Informationen zum Beschwerdedatum, Kategorie der Beschwerde und Informationen zur Beschwerdezelle, Informationen zum Netzwerkalarmverlauf samt Alarmzelle und Datum;
- mindestens eine Kombinationseinheit (3), die konfiguriert ist, um eine maschinelle Lernmethode auszuführen, die die in der Datenbank (2) befindlichen Informationen auf der Basis von Zellen- und Datumsinformationen kombiniert;
- mindestens eine Anwendungseinheit (4), die konfiguriert ist, um Zellen und Beschwerdekategorien zu ermitteln, die wahrscheinlich Kundenbeschwerden erhalten werden, indem sie eine Regressionsmethode auf die in der Datenbank (2) gespeicherten Informationen anwendet, einschließlich:
▪ Angaben zum Verkehrsmessdatum,
▪ Informationen der Verkehrsmesszelle,
▪ Alarmzelle und Datum,
▪ Angaben zum Beschwerdedatum,
▪ Kategorie der Beschwerde,
▪ Informationen zur Beschwerdezelle; und
- mindestens eine Schätzeinheit (5), die konfiguriert ist, um eine Verkehrsschätzung durch die in der Anwendungseinheit (4) erhaltenen Daten durchzuführen.

2. System zur Schätzung des Netzverkehrs (1) nach Anspruch 1, **gekennzeichnet durch** die Datenbank (2), in der Informationen, die zum Verlauf der Netzwerkleistungsindikatoren, KPI, gehören, aufbewahrt werden.

3. System zur Schätzung des Netzverkehrs (1) gemäß einem der vorhergehenden Ansprüche, **gekennzeichnet durch** die Datenbank (2), in der Informationen, die zum Verlauf der Netzwerkkonfigurationsparameter gehören, aufbewahrt werden.

4. System zur Schätzung des Netzverkehrs (1) gemäß einem der vorhergehenden Ansprüche, **gekennzeichnet durch** die Datenbank (2), in der Informationen, die zum Verlauf von Arbeitsaufträgen gehören, aufbewahrt werden.

5. System zur Schätzung des Netzverkehrs (1) gemäß einem der vorhergehenden Ansprüche, **gekennzeichnet durch** die Datenbank (2), in der Informationen, die zum Verlauf der Wettervorhersage gehören, aufbewahrt werden.

6. System zur Schätzung des Netzverkehrs (1) gemäß einem der vorhergehenden Ansprüche, **gekennzeichnet durch** die Datenbank (2), in der Informationen, die zum Verlauf geplanter Arbeiten gehören, aufbewahrt werden.

7. System zur Schätzung des Netzverkehrs (1) gemäß einem der vorhergehenden Ansprüche, **gekennzeichnet durch** die Datenbank (2), in der Informationen, die zum Verlauf des Kampagnenverlaufs gehören, aufbewahrt werden.

8. System zur Schätzung des Netzverkehrs (1) gemäß einem der vorhergehenden Ansprüche, **gekennzeichnet durch** die Anwendungseinheit (4), die ein Modell für die Verkehrs schätzung während eines bestimmten Zeitraums durch ein Regressionsverfahren erzeugt.

## Revendications

1. Système d'estimation de trafic réseau (1) permettant d'effectuer une estimation de trafic pendant une certaine durée ; **caractérisé par** :
- au moins une base de données (2), dans lequel les informations suivantes sont stockées :
des informations appartenant à l'historique de trafic réseau, des informations sur la date de mesure de trafic, des informations sur la cellule de mesure de trafic, des informations sur l'historique des réclamations de clients, des informations sur les dates de réclamation, la catégorie de réclamation et des informations sur la cellule de réclamation reçue, des informations sur l'historique des alarmes de réseau, y compris la cellule et la date des alarmes ;
- au moins une unité de combinaison (3) configurée pour exécuter un procédé d'apprentissage automatique, qui combine les informations situées sur la base de données (2) en fonction d'informations de cellules et de dates ;
- au moins une unité applicative (4), configurée pour déterminer des cellules et des catégories de réclamations susceptibles de recevoir une réclamation de client en utilisant une méthode de régression sur les informations conservées dans la base de données (2) et comprenant :
▪ des informations sur la date de mesure de trafic,
▪ des informations sur la cellule de mesure de trafic,
▪ la cellule et la date des alarmes,
▪ des informations sur la date de la réclamation,
▪ la catégorie de réclamation,
▪ des informations sur la cellule de réclamation ; et
- au moins une unité d'estimation (5), configurée pour effectuer une estimation de trafic par les données obtenues dans l'unité applicative (4).

2. Système d'estimation de trafic réseau (1) selon la revendication 1, **caractérisé par** la base de données (2), dans lequel sont conservées des informations appartenant à l'historique des indicateurs de performance de réseau, Indicateur de performances clés, KPI.

3. Système d'estimation de trafic réseau (1) selon l'une quelconque des revendications précédentes, **caractérisé par** la base de données (2), dans lequel des informations appartenant à l'historique de paramètres de configuration de réseau sont conservées.

4. Système d'estimation de trafic réseau (1) selon l'une quelconque des revendications précédentes, **caractérisé par** la base de données (2), dans lequel des informations appartenant à l'historique des ordres de travaux sont conservées.

5. Système d'estimation de trafic réseau (1) selon l'une quelconque des revendications précédentes, **caractérisé par** la base de données (2), dans lequel des informations appartenant à l'historique des prévisions météorologiques sont conservées.

6. Système d'estimation de trafic réseau (1) selon l'une quelconque des revendications précédentes, **caractérisé par** la base de données (2), dans lequel des informations appartenant à l'historique des travaux planifiés sont conservées.

7. Système d'estimation de trafic réseau (1) selon l'une quelconque des revendications précédentes, **caractérisé par** la base de données (2), dans lequel des informations appartenant à l'historique de l'historique de campagne sont conservées.

8. Système d'estimation de trafic réseau (1) selon l'une quelconque des revendications précédentes, **caractérisé par** l'unité applicative (4) qui crée un modèle pour l'estimation de trafic pendant une certaine durée par une méthode de régression.
